(19) Europäisches Patentamt
European Patent Office
Office européen des brevets

(11) Veröffentlichungsnummer: **0 314 685 B1**

(12) # EUROPÄISCHE PATENTSCHRIFT

(45) Veröffentlichungstag der Patentschrift :
**18.03.92 Patentblatt 92/12**

(51) Int. Cl.$^5$: **B60G 11/60,** B60G 11/22

(21) Anmeldenummer : **87904256.2**

(22) Anmeldetag : **01.07.87**

(86) Internationale Anmeldenummer :
**PCT/EP87/00358**

(87) Internationale Veröffentlichungsnummer :
**WO 88/00534 28.01.88 Gazette 88/03**

(54) **TORSIONSFEDERACHSE FÜR FAHRZEUG-ANHÄNGER.**

(30) Priorität : **18.07.86 DE 8619274 U**

(43) Veröffentlichungstag der Anmeldung :
**10.05.89 Patentblatt 89/19**

(45) Bekanntmachung des Hinweises auf die
Patenterteilung :
**18.03.92 Patentblatt 92/12**

(84) Benannte Vertragsstaaten :
**BE DE FR GB IT LU NL SE**

(56) Entgegenhaltungen :
**DE-U- 1 889 713**

(56) Entgegenhaltungen :
**DE-U- 7 432 566**
**FR-A- 1 187 273**
**FR-A- 2 123 291**
**FR-A- 2 442 728**

(73) Patentinhaber : **AL-KO KOBER AG**
**Ichenhauser Strasse 14**
**W-8871 Kötz 2 (DE)**

(72) Erfinder : **WERDICH, Anton**
**Südring 44**
**W-8878 Bibertal (DE)**

(74) Vertreter : **Ernicke, Hans-Dieter, Dipl.-Ing. et al**
**Schwibbogenplatz 2b**
**W-8900 Augsburg (DE)**

EP 0 314 685 B1

**Beschreibung**

Die Erfindung bezieht sich auf eine Torsionsfederachse für Fahrzeug-Anhänger, insbesondere Wohnwagen und dergleichen, bei welcher der einzelne Radschwinghebel auf einem hohlen Drehstab sitzt, der über strangförmige Gummikörper in einem mit dem Anhänger-Rahmen fest verbundenen, hohlprismatisch ausgebildeten Trägerrohr in Umfangsrichtung abgestützt ist und daß der hohle Drehstab von einem Stahltorsionsstab berührungsfrei durchsetzt ist, der auf der einen Seite mit dem Radschwinghebel und auf der anderen Seite mit dem Trägerrohr drehschlüssig verbunden ist.

Eine solche Torsionsfederachse ist der FR-A 2 123 291 als bekannt zu entnehmen. Dort sind der Drehstab und das Trägerrohr als im Querschnitt quadratisches Rohr ausgebildet, wobei die strangförmigen Gummikörper innenseitig an der planen Außenwand des Drehstabes und außenseitig an der abgerundeten Innenkante des Trägerrohres anliegen. Aus der Praxis weiß man, daß solche Torsionsfederachsen keine wesentliche Dämpfung besitzen, weil die Gummikörper praktisch nur einer Quetschverformung ausgesetzt werden.

Der den Drehstab durchsetzende Stahltorsionsstab verbindet den einen Radschwinghebel mit dem anderen und ist im mittleren Bereich drehschlüssig in einer das Trägerrohr durchsetzenden Wand abgestützt.

Im Zusammenwirken vermitteln die Gummikörper und der Stahltorsionsstab der Gummifederachse eine etwas steilere Federkennlinie mit einer höheren Belastbarkeit, die aber praktisch ohne Dämpfung wirkt.

Der Erfindung liegt die Aufgabe zugrunde, eine gegenüber dem Stand der Technik verbesserte Torsionsfederachse zu entwickeln, die mit einem wesentlich geringeren Einfederungsweg des Radschwinghebels auskommt, gute Dämpfung besitzt und einfach gestaltet sowie leicht montierbar und einstellbar ist.

Die erfindungsgemäße Lösung dieser Aufgabe besteht darin, daß die Gummikörper zwischen konkaven Einbauchungen des Drehstabes und gegenüberliegenden, passenden Eckbereichen des Trägerrohres geführt sind und daß jeweils ein Stahltorsionsstab einerseits in der Nabe des zugeordneten Radschwinghebels axial gesichert und andererseits in einer Nabe drehschlüssig geführt ist, die ihrerseits über einen verzahnten Flansch in einen ebenfalls verzahnten Flansch eingreift, der fester Bestandteil des Trägerrohres ist, wobei die beiden Flansche in zueinander tordierter Lage miteinander verschraubbar sind.

Mit einer solchen erfindungsgemäßen Anordnung wird die Abfederung des einzelnen Radschwinghebels verzweigt. Der eine Zweig wirkt über die Gummikörper auf das starre Trägerrohr und führt zur Dämpfung der Federbewegung. Der andere Zweig wirkt über den eingebauten, verhältnismäßig kurzen Stahltorsionsstab ebenfalls auf das starre Trägerrohr ein, ohne daß aber in diesem Zweig eine Dämpfung stattfindet. Die Folge davon ist, daß über einen kleinen Federweg eine hohe Federleistung mit Dämpfungwirkung erzielt wird. Dies führt dazu, daß unter Einsatz der erfindungsgemäßen Torsionsfederachse hochbelastete Fahrzeug-Anhänger dämpfend abgefedert werden können.

Es ist zwar durch die FR-A 2 442 728 eine Gummifederachse mit sechseckigem Trägerrohr und dreieckigem Drehstab bekannt, dessen Wände konkav eingebaucht sind. Der dort verwendete Stahlstab wirkt nicht als Stahltorsionsstab sondern als Stabilisierungselement für beide Radschwinghebel. Die bekannte Gummifederachse besitzt eine weiche Einfederung der Radschwinghebel bei allen Formen der Belastung und eine Dämpfung in der Federung.

Durch den Querschnitt der strangförmigen Gummikörper und durch die Härte des Gummimaterials lassen sich zwar die Federkennlinien der bekannten Torsionsfederachsen in gewissem Umfang verändern. Diese Möglichkeit ist aber dann nicht mehr gegeben, wenn die konstruktive Beschaffenheit des Fahrzeug-Anhängers eine willkürliche größenmäßige Gestaltung der Gummifederachse nicht zuläßt und zwar insbesondere dann, wenn der Federweg des Raschwinghebels konstruktiv begrenzt ist.

Im Rahmen eines Ausführungsbeispieles ist vorgesehen, daß der Stahltorsionsabstand mit einer Vorspannung von z.B. 5° eingebaut ist. Außerdem kann er aus mehreren Schichten von. im Querschnitt rechteckigen-Federstahlbändern bestehen, die zusammen einen vornehmlich quadratischen Querschnitt bilden. Die Erfindung läßt zwar dem Grunde nach die Bildung anderer Querschnitte des Stahltorsionsstabes zu was jedoch eigentlich nicht vernünftig ist, weil der hohle und im Wandbereich eingebauchte Drehstab eine Symmetrie der Einbauchungen besitzt und daher der Innenraum des Drehstabes verhältnismäßig begrenzt ist. Somit ist der quadratische Querschnitt des Stahltorsionsstabes eigentlich optimal.

In einer anderen Ausgestaltung der Erfindung sitzt der Stahltorsionsstab in einer passenden hohlprismatischen Aufnahme der Nabe des Trägerrohres bzw. des Radschwinghebels und ist dort gegen axiale Relativbewegung gesichert. Somit führt die Konstruktive Anordnung des Stahltorsionsstabes einschließlich seiner Verbindung mit der einzelnen Nabe zu einer axialen Festlegung des Drehstabes, der folglich nicht durch sonstige, vorbekannte Maßnahmen gegen axiale Eigenbewegungen gesichert werden muß.

Es empfiehlt sich, als axiale Sicherung einen stirnseitig gegenförmigen Gewindebolzen zu verwenden, der mit seiner Spitze in eine passende Anbohrung des Stahltorsionsstabes ragt und außenseitig (außerhalb der Nabe) mit einer Mutter gekontert ist.

Die erfindungsgemäß erwünschte Vorspannung des Stahltorsionsstabes läßt sich beispielsweise dann ohne großen Aufwand erreichen, wenn die Flansche zwischen dem Trägerrohr und der damit verbindbaren Nabe mit ineinandergreifenden Profilierungen, z.B. Verzahnungen, versehen sind. Im Einbauzustand der erfindungsgemäßen Torsionsfederachse wird daher die Flanschverbindung zwischen der Nabe und dem Trägerrohr erst dann geschlossen, wenn die erwünschte Vorspannung des Stahltorsionsstabes erreicht worden ist. Zufolge der ineinandergreifenden Profilierungen ist dann die eingestellte Vorspannung unveränderlich.

Schließlich sieht die Erfindung im Rahmen einer Ausgestaltung vor, daß zur Befestigung des Trägerrohres am Anhängerfahrgestell zwei U-förmig gebogene Bügel vorgesehen sind, die passende Aussparungen zum Durchtritt des Trägerrohres aufweisen und deren Bügelschenkel an der Innenseite des sie verbindenden Steges durch mindestens einen eingeschweißten Zwischensteg miteinander versteift sind. Eine solche Anordnung läßt unterschiedliche Befestigungsmöglichkeiten der Torsionsfederachse am Anhänger-Fahrgestell zu, beispielsweise über den Steg oder auch über die Schenkel des U-förmig gebogenen Bügels.

Einzelheiten der Erfindung sind in der Zeichnung schematisch und beispielsweise dargestellt. Es zeigen:

Fig. (1): einen Querschnitt durch eine erfindungsgemäße Torsionsfederachse,

Fig. (2): eine Stirnansicht auf einen am Ende der Torsionsfederachse gemäß Fig. (1) angebrachten Radschwinghebel,

Fig. (3): eine Seitenansicht der Torsionsfederachse gemäß Fig. (1) und (2) und

Fig. (4 -6): Diagramme für Torsionsfederachsen verschiedener Beschaffenheit in der Proportion von Radlast und Federweg.

Im Ausführungsbeispiel der Fig. (1) ist im Querschnitt das Prinzip der erfindungsgemäßen Torsionsfederachse (1) gezeigt. Danach ist ein hohler Drehstab (2) mit mehreren Einbauchungen (3) seiner Wandung außenseitig mit strangförmigen Gummikörpern (4) belegt, die sich an einem ortsfest am Anhänger-Rahmen angeordneten Trägerrohr (5) mit entsprechendem Querschnitt abstützen.

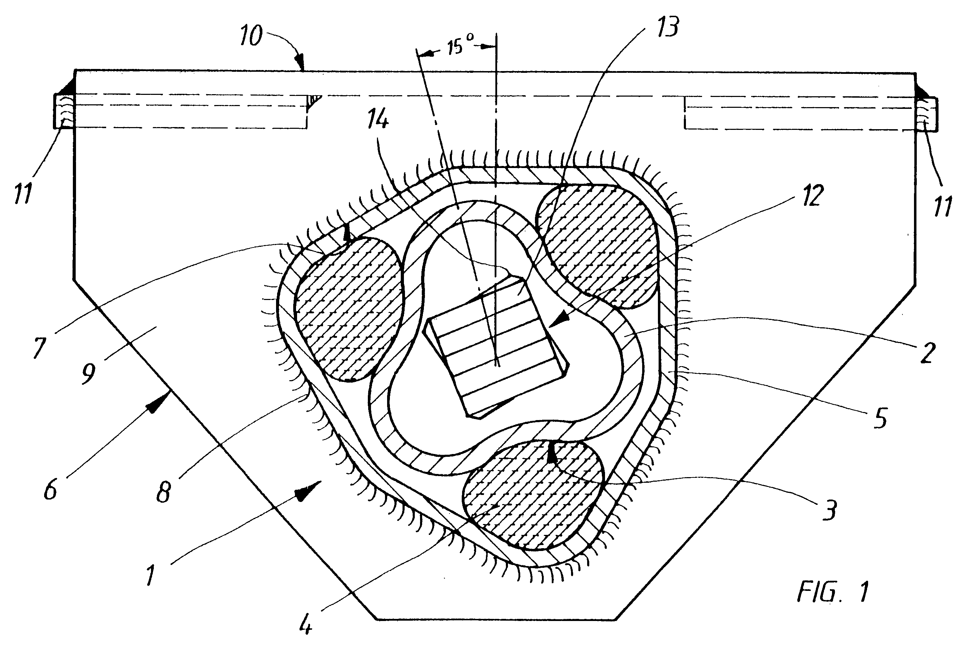

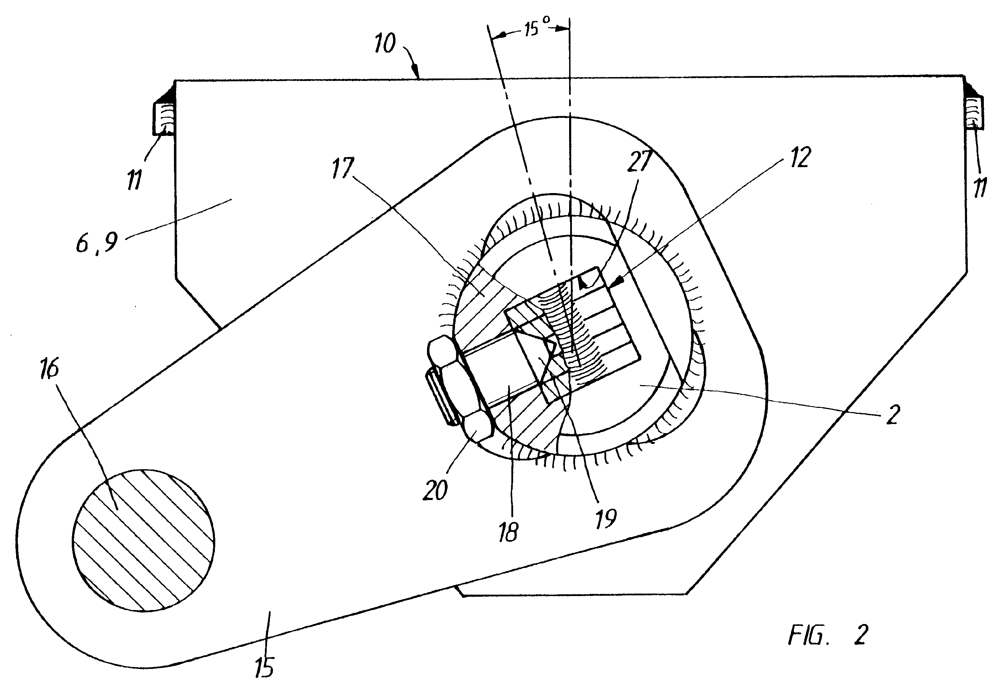

Am Drehstab (2) ist der einzelne Radschwinghebel (15) (Fig. 2) befestigt. Die Einfederung des Radschwinghebels (15) und damit des Drehstabes (2) führt damit zu einer Art Walkbewegung der strangförmigen Gummikörper (4) und damit zu einer abgedämpften Federung gegenüber dem starren Trägerrohr (5).

Dieses Trägerrohr (5) ist mit Hilfe eines oder mehrerer Bügel (6) am Anhänger-Rahmen befestigt. Der einzelne Bügel (6) weist eine entsprechende Aussparung (7) zur Aufnahme des Trägerrohres (5) auf, in deren Bereich beide Teile (5,6) durch eine Schweißnaht (8) miteinander verbunden sind.

Wie Fig. (3) zeigt, ist der einzelne Bügel (6) U-förmig gebildet und weist daher zwei zueinander parallele Bügelschenkel (9) auf, die durch einen Bügelsteg (10) miteinander verbunden sind. Um die Steifigkeit dieser Bügelschenkel (9) zu erhöhen, befindet sich an der Innenseite des Bügelsteges (10) eine Anordnung von Zwischenstegen (11), die mit den Bügelschenkeln (9) und dem Bügelsteg (10) verschweißt sind.

Der hohle Drehstab (2) wird von einem Stahltorsionsstab (12) durchsetzt, der beim Ausführungsbeispiel aus mehreren Lagen von Federstahlbändern (13) besteht, die miteinander zweckmäßigerweise verbunden sind.

Die Stirnenden dieses Stahltorsionsstabes (12) sind in besonderer Weise einerseits mit dem Trägerrohr (5) und andererseits mit dem Radschwinghebel (15) drehschlüsig verbunden, was aus der Darstellung der Fig. (3) hervorgeht.

Fig. (1) zeigt überdies, daß der Stahltorsionsstab (12) eine Vorspannung (14) aufweist, die keinen Einfluß über den Spannungszustand zwischen dem Drehstab (2) und dem Trägerrohr (5) besitzt. Während also die durch den strangförmigen Gummikörper (4) gebildete Gummifederachse noch verhältnismäßig unbeeinflußt ist, weist der Stahltorsionsstab (12) bereits eine interne Vorspannung auf.

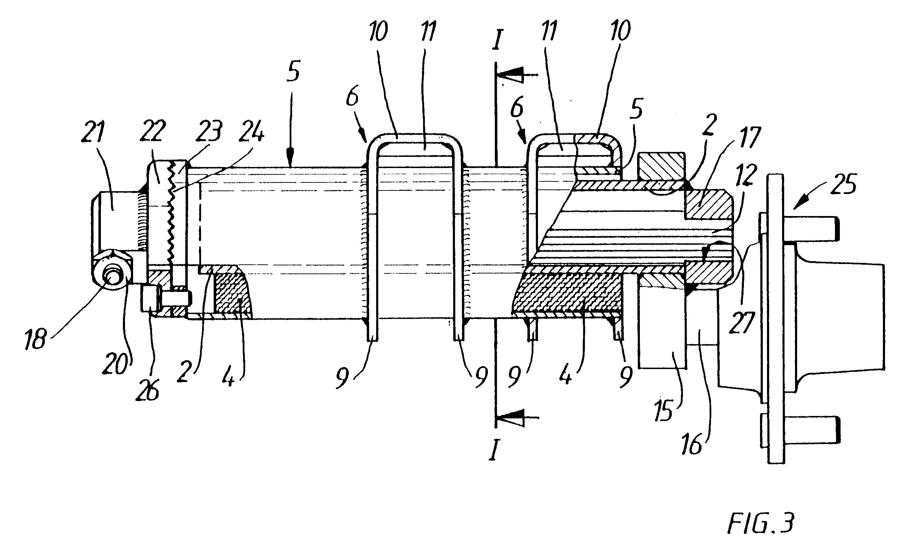

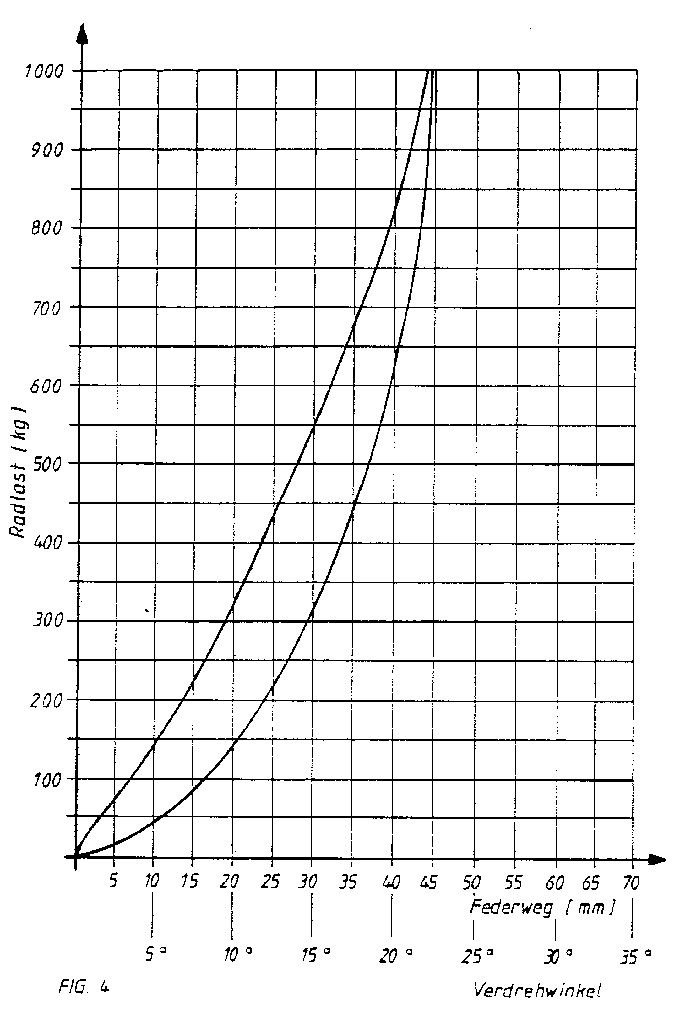

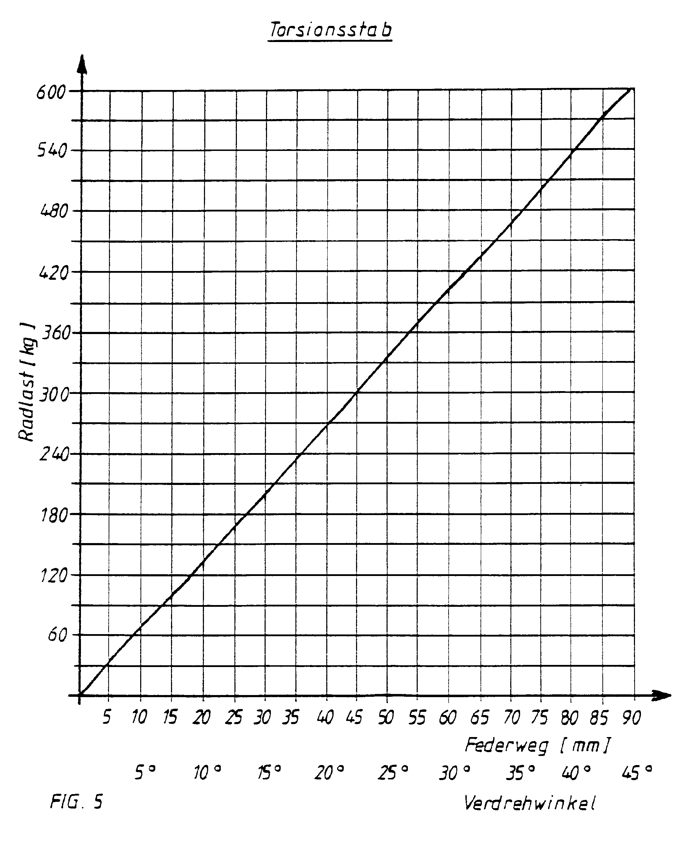

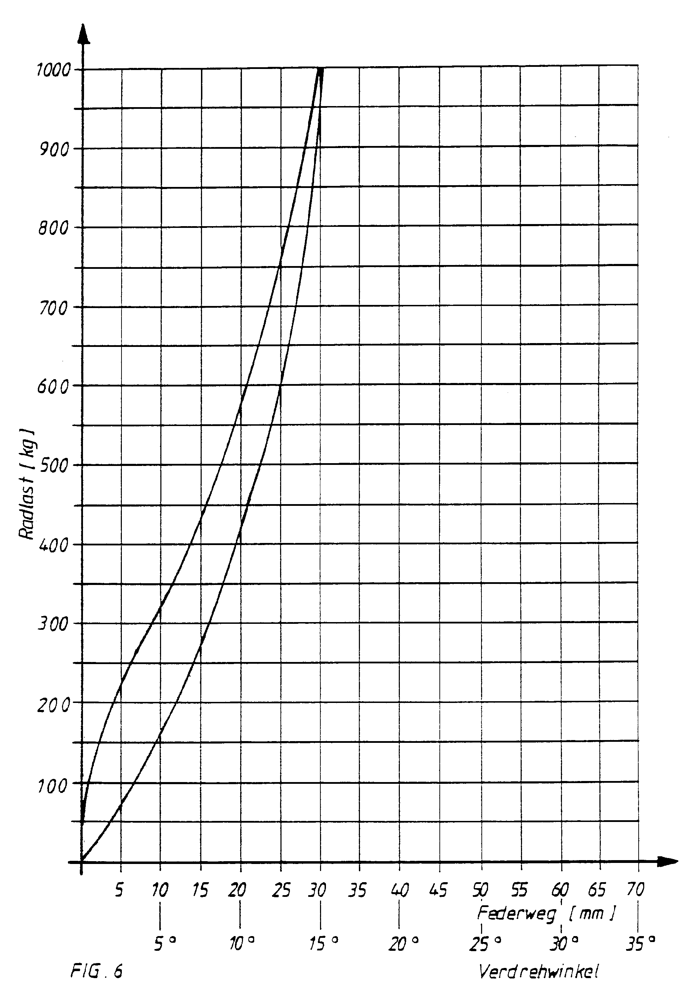

Im Ausführungsbeispiel der Fig. (2) ist gezeigt, wie der Radschwinghebel (15) drehschlüssig mit dem Stahltorsionsstab (12) verbunden werden kann, wobei anzumerken ist, daß die gleiche Konstruktion zwischen der Nabe (21) des Trägerrohrs (5) (Fig. 3) und dem Stahltorsionsstab (12) gewählt werden kann.

Die Nabe (17) des Radschwinghebels (15) wird im Falle der Fig. (2) von einem Gewindebolzen (18) durchsetzt, der mit einer kegelförmigen Spitze (19) in eine passende Anbohrung des Stahltorsionsstabes (12) eingreift. An der Außenseite der Nabe (17) befindet sich eine Kontermutter (20) zur unverdrehbaren Anordnung des Gewindebolzens (18), was durch geeignete Kleber begünstigt werden kann.

Der Stahltorsionsstab (12) ist dabei in einer hohlprismatischen und passenden Aufnahme (27) in der Nabe (17) des Radschwinghebels (15) geführt.

Aus der Seitensicht der erfindungsgemäßen Torsionsfederachse (1) gemäß Fig. (3) ergibt sich, daß die trägerseitige Nabe (21) über Flansche (22, 23) mit dem Trägerrohr (5) mit Hilfe der Flanschverschraubung (26) fest und drehstarr verbunden ist. Um die Drehstarrheit in Umfangsrichtung zu sichern, können die Flansche (22,23) mit Profilierungen (24), z. B. radialen Verzahnungen, versehen sein. Diese Anordnung ist in der Lage, die Vorspannung des Stahltorsionsstabes (12) in erwünschter Weise herbeizuführen und zu fixieren. Man braucht lediglich die Flanschverschraubung (26) zu lösen und die Nabe (21) des Trägerrohres (5) bis zu dem erwünschten Vorspannungswinkel zu verdrehen, um danach die Flanschverbindung (22,23,26) herbeizuführen.

Auf der anderen Seite kann die Verbindung zwischen dem Stahltorsionsstab (12) und der Nabe (17) des Radschwinghebels (15) in gleicher Weise erfolgen. Die Radachse (16) des Radschwinghebels (15) nimmt den Radträger (25) in herkömmlicher Weise auf.

Die Diagramme der Fig. (4 - 6) zeigen den wesentlichen Federunterschied unterschiedlicher Achsen. In Fig. (4) ist eine herkömmliche Gummifederachse hinsichtlich ihres Federweges dargestellt, wobei man deutlich die Dämpfung der Federung an der Hysteresis-Kurve erkennt. Allerdings ist erkennbar, daß bei einer Radlast von z.B. 1000 kg ein Federweg von 45 mm bzw. 22,5° beansprucht wird.

Anders ist die Kurve eines reinen Stahltorsionsstabes gemäß Fig. (5). Dieser reine Stahltorsionsstab weist keine Dämpfung auf. Im Vergleich zu Fig. (4) ergibt sich, daß der Stahltorsionsstab schon bei 600 kg Belastung einen Federweg von 90 mm bzw. einen Verdrehwinkel von 45° verursacht.

Die erfindungsgemäße Kombination der vorbekannten Gummifederachse mit dem vorbekannten Stahltorsionsstab ist in Fig. (6) dargestellt und weist ein überraschendes Ergebnis auf, was durch reine Kombinationsgedanken nicht vorhersehbar war.

Es zeigt sich aus Fig. (6) zunächst, daß die erfindungsgemäße Torsionsfederachse auch eine Dämpfung aufweist, wenngleich diese nicht so üppig ausfällt wie Fig. (4) zur vorbekannten Gummifederachse ausweist. Im Vergleich der Fig. (4) und (6) zeigt sich jedoch, daß die erfindungsgemäße Torsionsfederachse bei einem Verdrehwinkel von 5° schon fast 350 kg Last aufnimmt, wohingegen bei der vorbekannten Gummifederachse gemäß Fig. (1) schon 150 kg Radlast ausreichen, den gleichen Verdrehwinkel herbeizuführen. Es versteht sich von selbst, daß bei den Diagrammen der Fig. (4) - (6) gleiche Belastungen angenommen sind.

Die erfindungsgemäße Torsionsfederachse weist also gemäß Fig. (6) einen sehr geringen Federweg im Anfangsbereich der steigenden Belastungen auf. Auch in der Spitzenbelastung ist der Federweg der erfindungsgemäßen Torsionsfederachse wesentlich geringer als jener der vorbekannten Achsen.

## Patentansprüche

1. Torsionsfederachse für Fahrzeug-Anhänger, insbesondere Wohnwagen und dergleichen, bei welcher der einzelne Radschwinghebel (15) auf einem hohlen Drehstab (2) sitzt, der über strangförmige Gummikörper (4) in einem mit dem Anhänger-Rahmen fest verbundenen, hohlprismatisch ausgebildeten Trägerrohr (5) in Umfangsrichtung abgestützt ist und daß der hohle Drehstab (2) von einem Stahltorsionsstab (12) berührungsfrei durchsetzt ist, der auf der einen Seite mit dem Radschwinghebel (15) und auf der anderen Seite mit dem Trägerrohr (5) drehschlüssig verbunden ist, dadurch **gekennzeichnet**, daß die Gummikörper (4) zwischen konkaven Einbauchungen (3) des Drehstabes (2) und gegenüberliegenden, passenden Eckbereichen des Trägerrohres (5) geführt sind und daß jeweils ein Stahltorsionsstab (12) einerseits in der Nabe (17) des zugeordneten Radschwinghebels (15) axial gesichert (18) und andererseits in einer weiteren Nabe (21) drehschlüssig geführt ist, die ihrerseits über einen verzahnten Flansch (22) in einen ebenfalls verzahnten Flansch (23) eingreift, der fester Bestandteil des Trägerrohres (5) ist, wobei die beiden Flansche (22,23) in zueinander tordierter Lage miteinander verschraubbar (26) sind.

2. Achse nach Anspruch (1), dadurch **gekennzeichnet** , daß die Vorspannung (14) des Stahltorsionsstabes (12) 5° beträgt.

3. Achse nach Anspruch (1) oder (2), dadurch **gekennzeichnet** , daß der Stahltorsionsstab (12) aus mehreren Schichten von im Querschnitt rechteckigen Federstahlbändern (13) besteht, die zusammen einen vornehmlich quadratischen Querschnitt bilden.

4. Achse nach Anspruch (4), dadurch **gekennzeichnet**, daß als axiale Sicherung ein stirnseitig kegelförmiger Gewindebolzen (18) vorgesehen ist, der mit seiner Spitze (19) in eine passende Anbohrung des Stahltorsionsstabes (12) ragt und außenseitig mit einer Mutter (20) gekontert ist.

5. Achse nach Anspruch (1) oder einem der folgenden, dadurch **gekennzeichnet**, daß zur Befestigung des Trägerrohres (5) am Anhänger-Fahrgestell zwei U-förmig gebogene Bügel (6) vorgesehen sind, die passende Aussparungen (7) zum Durchtritt des Trägerrohres (5) aufweisen und deren Bügelschenkel (9) an der Innenseite des sie verbindenden Steges (10) durch mindestens einen eingeschweißten Zwischensteg (11) miteinander versteift sind.

## Claims

1. Torsion spring axle for vehicle trailers, in particular caravans and the like, in which the single wheel rocking arm (15) is seated on a hollow torsion bar (2) which is supported, in the peripheral direction, by way of strand-like rubber bodies (4) in a support pipe (5) constructed as a hollow prism and fixedly connected to the trailer frame, and in that there passes through the hollow torsion bar (2), without contact, a steel torsion rod (12) which is connected, in rotary engagement, on one side to the wheel rocking arm (15) and on the other side to the support pipe (5), characterized in that the rubber bodies (4) are guided between concave indentations (3) of the torsion bar (2) and opposite form-fitting corner regions of the support pipe (5), and in that in each case a steel torsion rod (12) is, on one side, secured axially (18) in the hub (17) of the associated wheel rocking arm (15) and, on the other side, is guided, in rotary engagement, in a further hub (21) which in turn engages by way of a toothed flange (22) in a likewise toothed flange (23) which is an integral component of the support pipe (5), it being possible for the two flanges (22, 23) to be screwed (26) to one another in a mutually torsional position.

2. Axle according to Claim (1), characterized in that the pretension (14) of the steel torsion rod (12) is 5°.

3. Axle according to Claim (1) or (2), characterized in that the steel torsion rod (12) comprises a plurality of layers of spring steel bands (13) which are rectangular in cross-section and which together form a substantially square cross-section.

4. Axle according to Claim (4), characterized in that there is provided as an axial securing means a threaded pin (18) which is conical on the end side and which projects by means of its tip (19) into a form-fitting bore of the steel torsion rod (12) and on the outside is countered by means of a nut (20).

5. Axle according to Claim (1) or one of the subsequent claims, characterized in that there is provided for securing the support pipe (5) to the trailer undercarriage two stirrups (6) bent in a U-shape which have form-fitting cutouts (7) for the support pipe (5) to pass through and whereof the stirrup legs (9) on the inside of the web connecting them (10) are reinforced with one another by at least one welded-in intermediate web (11).

## Revendications

1. Essieu à ressort de torsion pour remorques de véhicules, notamment de caravanes et analogues, dans lequel le levier oscillant de roue (15) prend appui sur une barre de torsion creuse (2), qui prend appui dans la direction circonférentielle, par l'intermédiaire de corps en caoutchouc en forme de boudins (4), dans un tube de support creux prismatique (5) raccordé rigidement au châssis de la remorque, et que le ressort de torsion (2) est traversé sans contact par une barre de torsion en acier (12), qui est raccordée avec blocage en rotation d'un côté au levier oscillant de roue (15) et de l'autre côté au tube de support (5), caractérisé par le fait que les corps en caoutchouc (4) s'étendent entre des renfoncements concaves (3) de la barre de torsion (2) et des zones d'angle adaptées, opposées du tube de support (5), et que respectivement une barre de torsion en acier (12) traverse, d'une part, le moyeu (17) du levier oscillant de roue associé (15) en étant bloqué axialement (18), et, d'autre part, un autre moyeu (21) en étant bloqué en rotation, cet autre moyeu engrenant pour sa part par l'intermédiaire d'une bride dentée (22) avec une bride également dentée (23), qui est un composant fixe du tube de support (5), les deux brides (22,23) pouvant être vissées l'une à l'autre (26) dans une position de torsion l'une par rapport a l'autre.

2. Essieu suivant la revendication 1, caractérisé par le fait que la précontrainte (14) de la barre de torsion en acier (12) est égale à 5°.

3. Essieu suivant la revendication 1 ou 2, caractérisé par le fait que le ressort de torsion en acier (12) est formée de plusieurs couches de bandes d'acier pour ressorts (13), qui possèdent une forme rectangulaire en coupe transversale et forment ensemble une section transversale essentiellement carrée.

4. Essieu suivant la revendication 4, caractérisé par le fait qu'il est prévu, en tant que dispositif de blocage axial, un boulon fileté (18) dont l'extrémité frontale est conique et qui pénètre par sa pointe (19) dans un perçage apparié de la barre de torsion en acier (12) et est bloqué sur le côté extérieur par un écrou (20).

5. Essieu selon la revendication 1 ou l'une des suivantes, caractérisé par le fait que pour la fixation du tube de support (5) sur le châssis de la remorque, il est prévu deux étriers (6) repliés en forme de U, qui possèdent des évidements adaptés (7) permettant le passage du tube de support (5) et dont les branches (9) sont rigidifiées réciproquement, au niveau du côté intérieur de la barrette (10) qui les relie, par au moins une barrette intercalaire soudée (11).

FIG. 1

EP 0 314 685 B1

FIG. 2

FIG.3

FIG. 4

Torsionsstab

FIG. 5

FIG. 6